# EUROPEAN PATENT APPLICATION

(11) **EP 3 264 386 A1**
(43) Date of publication of application: **03.01.2018**
(21) Application number: 16176622.5
(22) Date of filing: 28.06.2016
(51) Int. Cl.: G08C 17/02

(54) **EXTERNAL USER INTERFACE FOR CONTROLLING AT LEAST ONE DOMESTIC APPLIANCE**

(71) Applicant: Electrolux Appliances Aktiebolag, 105 45 Stockholm (SE)
(72) Inventor: HOLZINGER, Jochen, 91541 Rothenburg ob der Tauber (DE); WUNDLING, Holger, 91541 Rothenburg ob der Tauber (DE); HOFFMANN, Harald, 91541 Rothenburg ob der Tauber (DE)
(74) Representative: Electrolux Group Patents

(57) **Abstract**

The present invention relates to an external user interface (10) for controlling at least one domestic appliance (12). The external user interface (10) includes at least one input device (14), at least one output device (14), at least one control unit and at least one memory for storing data and/or programs. The external user interface (10) is formed as a mobile device and connectable to a predetermined group of domestic appliances (12), wherein the external user interface (10) is provided for controlling said group of domestic appliances (12), and wherein data and/or programs related to the domestic appliances (12) are stored in the memory of the external user interface (10).

## Description

The present invention relates to an external user interface for controlling at least one domestic appliance according to the preamble of claim 1. Further, the present invention relates to an equipment system including a predetermined group of domestic appliances and an external user interface.

A user interface for controlling a domestic appliance is usually an integrated part of said domestic appliance. Therefore, each domestic appliance includes an own user interface, wherein said user interface is mostly adapted to the corresponding domestic appliance. Thus, the user has to learn the special properties and functions of the user interface of each domestic appliance. Further, the complexity is very high, since each domestic appliance required an own user interface.

DE 10 2013 214 929 A1 discloses a method for controlling a cooking appliance, in particular a cooking hob. The cooking appliance is controlled by an external user interface formed as a mobile device. The external user interface includes input and output devices and a control unit. A control program for the cooking appliance is stored in a memory of the external user interface. However, the external user interface is provided for the cooking appliance only, so that any other domestic appliances require further user interfaces.

It is an object of the present invention to provide an external user interface, which reduces the complexity of a group of domestic appliances.

The object is achieved by the external user interface according to claim 1.

According to the present invention the external user interface is connectable to a predetermined group of domestic appliances, wherein the external user interface is provided for controlling said group of domestic appliances, and wherein data and/or programs related to and/or for controlling the domestic appliances are stored in the memory of the external user interface.

The core of the present invention is the universal external user interface provided for controlling the group of domestic appliances. Since data and/or programs related to the domestic appliances are stored in the memory of the external user interface, the structure of said domestic appliances is less complex. The domestic appliances require only a small internal user interface and control unit. Thus, the space requirements inside the domestic appliances are reduced. The functions of the domestic appliances may be modified by updating the programs stored in the memory of the external user interface.

According to a preferred embodiment of the present invention the predetermined group of domestic appliances comprises at least two domestic appliances, wherein preferably the at least two domestic appliances are selected from domestic cookers, in particular cooking hobs, cooking ovens and/or microwave ovens, domestic laundry appliances, in particular washing machines, laundry dryers and/or washer-dryers, and domestic cooling appliances, in particular refrigerators, freezers and/or wine-coolers. Several domestic appliances are simultaneously controllable. In particular, the total power of the household may be limited. For example, domestic appliances with high energy consumption, e.g. washing machines or laundry dryers, may be activated at times, when the electricity tariff is relative low. The control of the domestic appliances may be performed according to a menu or a time table. For example, the cooking is activated, when the cooking oven is preheated. Further, a set timer may be activated, after an oven door has been opened and closed again.

Further, at least one user manual, at least one control program and/or device-specific data of the domestic appliances, in particular of different types of domestic appliances, may be stored in the memory of the external user interface. Preferably, the user manuals, control programs and/or device-specific data of different types of domestic appliances may be stored in the memory of the external user interface, so that the user manual, control program and/or device-specific data of a specific type of domestic appliance can be selected by the user and/or dependent on a connection and/or interaction with a specific device.

Preferably, software updates of said user manual, control program and/or device-specific data are downloadable from the internet and installable in the external user interface.

Preferably, the external user interface is configured to display, preferably in a first operating state, at least one user manual. Furthermore, the external user interface can be configured to control, preferably in a second operating state, at least one operating function or parameter of at least one domestic appliance using the control program. Furthermore, the external user interface can be configured to contact, preferably in a third operating state, a service center. The contact can be made by transmitting an electronic message to the service center and/or by initiating a telephone call to the service center.

Preferably, the output device is configured to contact a server computer using an internet connection, download and/or receive a program and/or function for operating a domestic appliance from the server computer, especially as program code, and transfer the program and/or function for operating the domestic appliance to the domestic appliance or to the memory of the external user interface, so that the program and/or function can be installed on the domestic appliance and/or on the external user interface by the external user interface.

The installation of the program and/or function on the domestic appliance can be triggered, for example, by an internal message of the external user interface or by a message of the external user interface which is transmitted to the domestic appliance. This makes it possible to add, modify or update one or several programs and/or functions of the domestic appliance by an external server computer.

Moreover, at least one video clip related to at least one domestic appliance may be stored in the memory of the external user interface, wherein preferably at least one user manual and/or instructions for cleaning and/or operation of the domestic appliances is formed as a video clip and stored in the memory of the external user interface.

In particular, each domestic appliance of the group of domestic appliances is connectable to the external user interface and/or the group of domestic appliances are produced and/or distributed by the same producer and/or distributor, respectively.

Preferably, a service center contact function for the domestic appliances is formed as application software and stored in the memory of the external user interface.

For example, the external user interface is connectable to the domestic appliances via a wireless connection, for example via a Wi-Fi, Bluetooth, ZigBee and/or WLAN connection.

Alternatively or additionally, the external user interface is connectable to the domestic appliances via a plug-in connection, for example via a USB cable and/or a docking station.

In particular, the external user interface includes at least one touch screen panel, so that the input device and the output device are formed by said touch screen panel, wherein preferably said external user interface is a smartphone or a tablet personal computer and connectable or connected to the internet. Modifications of the control program and device-specific data of the domestic appliances may be downloaded from the internet. Moreover, the external user interface may include links to websites providing information about the corresponding domestic appliances.

Preferably, the domestic appliance is at least one domestic cooker, in particular cooking hob, cooking oven and/or microwave oven, dishwasher, domestic laundry appliance, in particular washing machine, laundry dryer and/or washer-dryer, and/or domestic cooling appliance, in particular refrigerator, freezer and/or wine-cooler.

Further, the present invention relates to an equipment system including the predetermined group of domestic appliances and the external user interface mentioned above, wherein the external user interface is connectable or connected to each of the domestic appliances and provided for controlling the group of domestic appliances.

For example, at least one of the domestic appliances includes an internal docking station for receiving the external user interface, so that said domestic appliance is connectable or connected to the external user interface via a wiring connection and controllable by said external user interface.

Alternatively or additionally, the equipment system includes an external docking station for receiving the external user interface, so that the external user interface is connectable or connected to the external docking station via the wiring connection, wherein in turn said external docking station is connectable or connected to the domestic appliances via one or more wireless connections and/or plug-in connections.

In particular, at least one of the domestic appliances comprises an internal user interface, wherein said internal user interface includes at least an on-off switch and/or a repeat key, and wherein preferably said internal user interface includes security relevant functions. For example, the on-off switch is provided for safety reasons. The repeat key allows that the domestic appliance may be started again with the same adjustments of the last operation. Many users often apply the same adjustments.

Preferably, the functionality and/or operation elements of the internal user interface of the or each domestic appliance are limited to an on-off switch and/or a repeat key, wherein further functionality and/or operation elements of the user interface of the domestic appliance are only arranged at the external user interface.

Further, a child-proof lock may be activated or activatable by disconnecting the external user interface from the domestic appliances, wherein preferably said child-proof lock is overcome by operating a key of the internal user interface. Thus, the disconnection of the external user interface from the domestic appliances activates automatically the child-proof lock. Preferably, the child-proof lock is configured to be activated after the external user interface has been removed from the domestic appliances by a predefined distance or when the signal strength of the external user interface decreases below a predefined level.

Preferably, the external user interface is configured to control the domestic appliances in such a way that a predetermined overall power consumption will not be succeeded and/or in such a way that the domestic appliances are operated partially or entirely sequentially. This means, for example, that the overall power can be limited to a maximum value. In addition, a sequence of operation of the devices can be determined by the user.

In an embodiment, the external user interface can be configured in such a way that it operates the domestic appliances during a preselected time span, for example during the night. In this case, the domestic appliances can be operated at times where the electricity is cheaper. Furthermore, for example, the external user interface can control an oven to preheat during the operation of a cooking hob.

Preferably, a timer on the external user interface can begin to count down from a preset time span after the door of a domestic appliance, for example an oven, has been opened and/or closed. After the preset time span has been elapsed, another function can be triggered by the external user interface.

At last, the group of the domestic appliances may comprise at least one cooking hob, cooking oven, microwave oven, dishwasher, refrigerator, freezer, washing machine, laundry dryer and/or washer-dryer.

Novel and inventive features of the present invention are set forth in the appended claims.

Embodiments of the present invention will be described in further detail with reference to the drawings, in which
- FIG 1: illustrates a schematic perspective view of a domestic appliance and an external user interface according to a first embodiment of the present invention,
- FIG 2: illustrates a schematic perspective view of the domestic appliance and the external user interface according to the first embodiment of the present invention,
- FIG 3: illustrates a schematic perspective view of the domestic appliance and the external user interface according to a second embodiment of the present invention,
- FIG 4: illustrates a schematic perspective view of the domestic appliance and the external user interface according to a third embodiment of the present invention,
- FIG 5: illustrates a detailed schematic perspective view of an internal docking station and the external user interface according to the third embodiment of the present invention, and
- FIG 6: illustrates a schematic perspective view of an external docking station for the external user interface according to the first embodiment of the present invention.

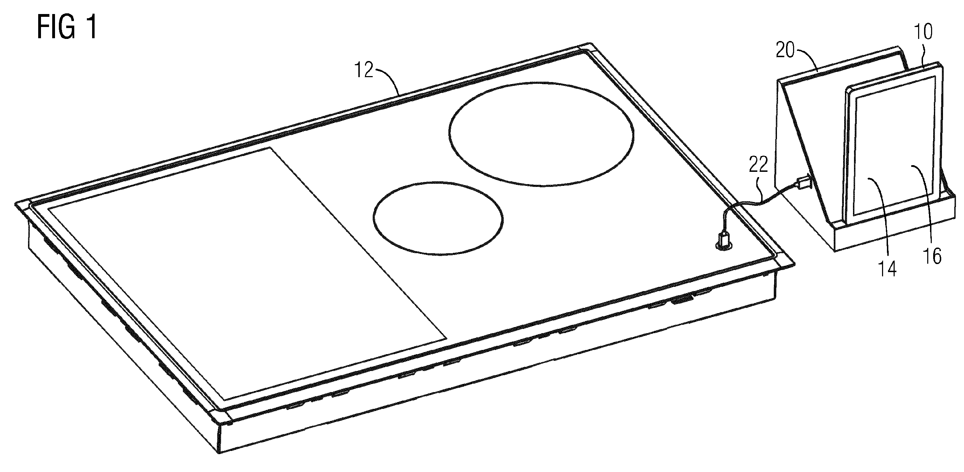

FIG 1 illustrates a schematic perspective view of a domestic appliance 12 and an external user interface 10 according to a first embodiment of the present invention.

The external user interface 10 for controlling at least one domestic appliance 12 includes, in the embodiment, an input device 14 which is constituted by or comprises a touch screen. As an alternative or as part of the touch screen, also an input device which comprises buttons and/or knobs is possible. The external user interface 10 includes at least one output device 16, which is constituted by or comprises the same or another touch screen or a screen.

The external user interface 10 includes at least one control unit, which can be constituted by a microprocessor, for example. The external user interface 10 also includes at least one memory for storing data and/or programs, for example a flash memory. The external user interface 10 is formed as a mobile device, which means that the external user interface 10 can be a mobile phone, smartphone or tablet, especially an electronic tablet, for example.

The external user interface 10 is connectable to a predetermined group of domestic appliances 12, wherein the external user interface 10 is provided for controlling said group of domestic appliances 12. Data and/or programs related to the domestic appliances 12 are stored in the memory of the external user interface 10.

An external user interface 10 according to the invention is especially a user interface without a firm and/or permanent connection to a domestic appliance 12, as preferably it is only connected or connectable to the domestic appliance 12 by a docking station, a cable with a plug, for example a USB-connection, and/or a radio connection. The external user interface 10 is preferably a separate user interface and/or a separate device with respect to the domestic appliances 12.

An internal user interface 10 according to the invention is especially a user interface with a firm and/or permanent connection to a domestic appliance 12, as preferably it is firmly and/or permanently connected to the domestic appliance 12 by fixing means, for example by screws. The internal user interface 10 is preferably an integrated user interface of the domestic appliance 12.

In this example, the domestic appliance 12 is a cooking hob 12. In general, the domestic appliance 12 may be arbitrary domestic appliances, for example domestic cookers, in particular cooking hobs, cooking ovens and/or microwave ovens, domestic laundry appliances, in particular washing machines, laundry dryers and/or washer-dryers, and domestic cooling appliances, in particular refrigerators, freezers and/or wine-coolers. Preferably, the external user interface is connected or connectable to a group of domestic appliances.

The external user interface 10 can be a smartphone or a tablet personal computer. The external user interface 10 is attached on an external docking station 20. Said external docking station 20 is connected to the domestic appliance 12 via a cable 22. For example, the cable 22 is a USB cable. The external docking station 20 is a mobile device and movable within a radius corresponding to the length of the cable 22.

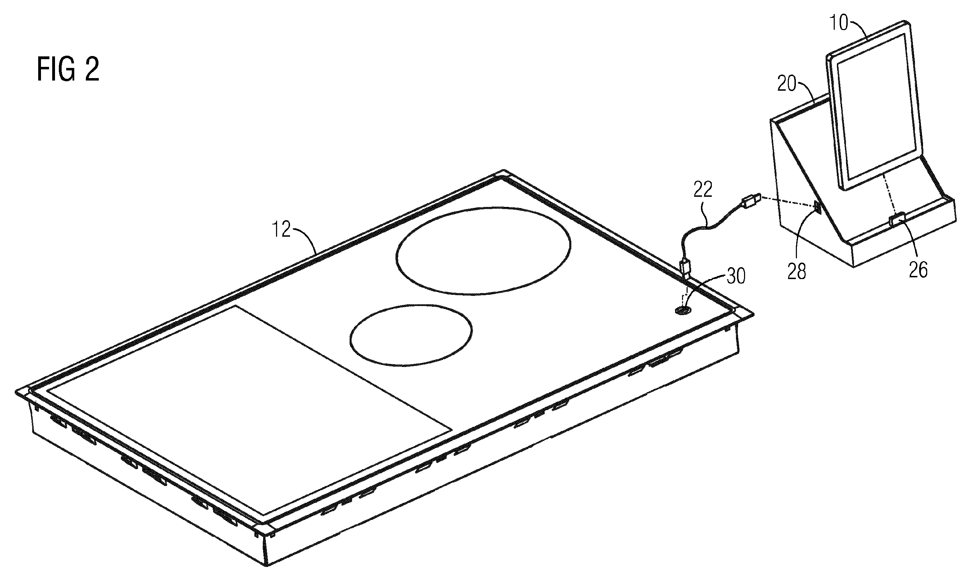

FIG 2 illustrates a schematic perspective view of the domestic appliance 12 and the external user interface 10 according to the first embodiment of the present invention. In FIG 2 the external user interface 10 is disconnected from the external docking station 20 and the cable 22 is disconnected from the external docking station 20 and the domestic appliance 12.

The external docking station 20 includes a connector 26 provided for an electrical and mechanical connection between the external user interface 10 and said external docking station 20. Further, the external docking station 20 includes a first cable connection 28 provided for receiving a plug of the cable 22. In a similar way, the domestic appliance 12 includes a second cable connection 30 provided for receiving another plug of the cable 22.

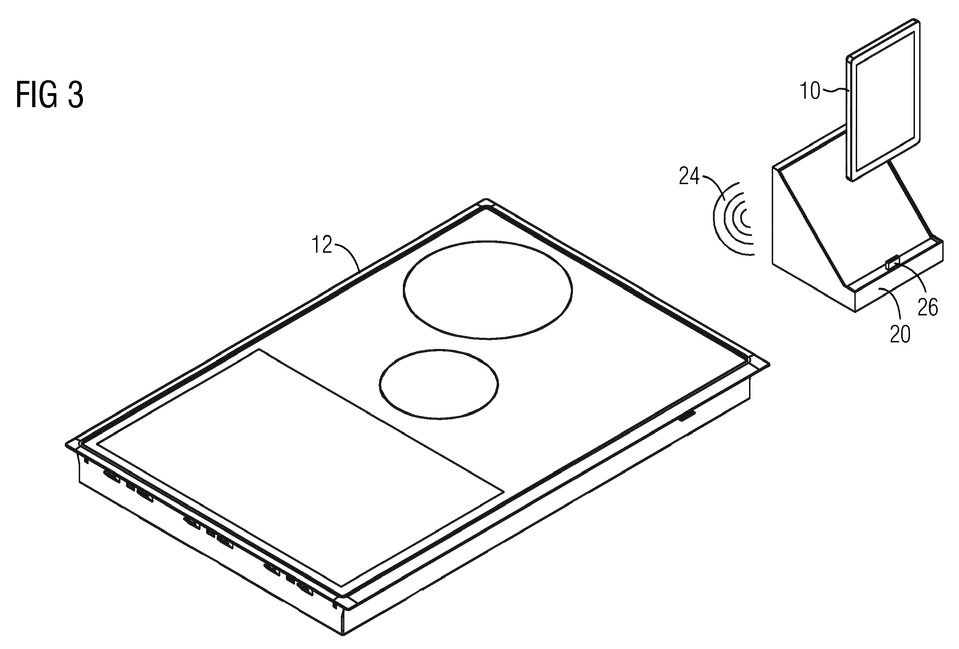

FIG 3 illustrates a schematic perspective view of the domestic appliance 12 and the external user interface 10 according to a second embodiment of the present invention.

The second embodiment comprises a wireless connection 24 between the external docking station 20 and the domestic appliance 12 instead of the cable 22 in the first embodiment. The external docking station 20 is movable within the range of the wireless connection 24. The wireless connection 24 between the external docking station 20 and the domestic appliance 12 may be a Wi-Fi, Bluetooth, ZigBee or WLAN connection, for example.

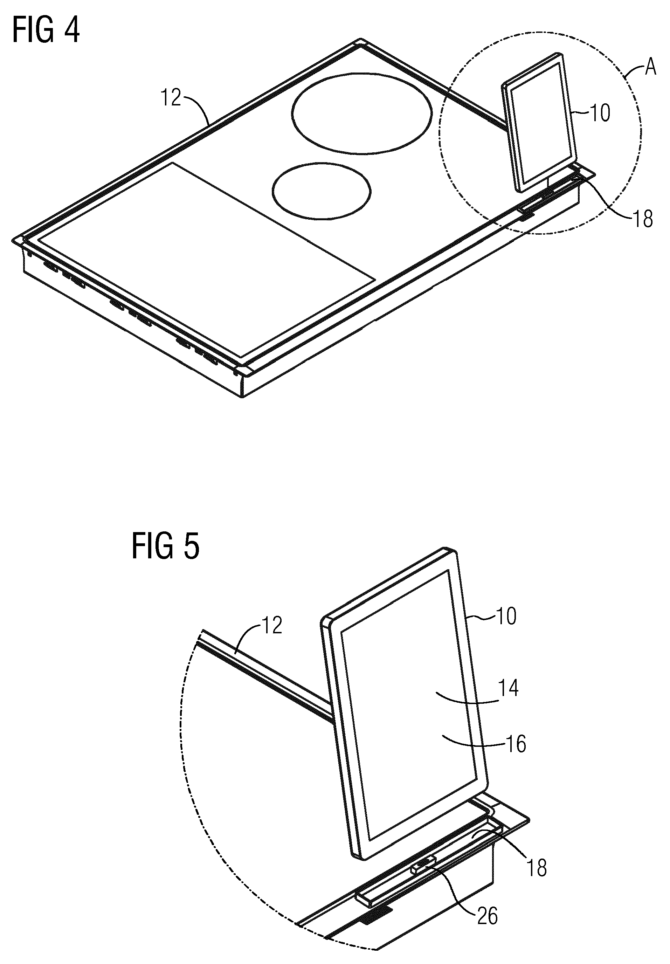

FIG 4 illustrates a schematic perspective view of the domestic appliance 12 and the external user interface 10 according to a third embodiment of the present invention.

The domestic appliance 12 of the third embodiment includes an internal docking station 18 for receiving the external user interface 10. In this example, the internal docking station 18 is arranged in an outer portion of the cooking hob 12.

FIG 5 illustrates a detailed schematic perspective view of the internal docking station 18 and the external user interface 10 according to the third embodiment of the present invention. FIG 5 shows the area A of FIG 4 in an enlarged representation.

The internal docking station 18 includes the connector 26 for the electrical and mechanical connection between said internal docking station 18 and the external user interface 10. The external user interface 10 may act as stationary and mobile user interface.

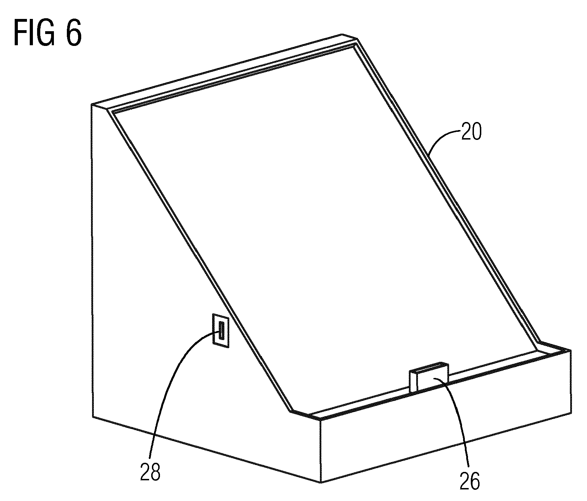

FIG 6 illustrates a schematic perspective view of the external docking station 20 for the external user interface 10 according to the first embodiment of the present invention.

The external docking station 20 includes the connector 26 for the electrical and mechanical connection between said external docking station 20 and the external user interface 10. Further, the external docking station 20 includes the first cable connection 28 for receiving one plug of the cable 22 connecting said external docking station 20 to the domestic appliance 12.

The external user interface 10 according to the present invention is a universal mobile user interface provided for controlling a group of different domestic appliances. The data and/or programs related to the domestic appliances are stored in a memory of the external user interface 10. Thus, the structures of said domestic appliances 12 are less complex. The domestic appliances require only a small internal user interface and control unit, so that the space requirements inside the domestic appliances 12 are reduced. The functions of the domestic appliances 12 may be modified by updating the programs stored in the memory of the external user interface 10. Moreover, the user manuals of a number of different domestic appliances 12 may be stored in the memory of the external user interface 10.

In particular, the external user interface 10 includes a touch screen panel, so that the input device and the output device are formed by said touch screen panel. Preferably, the external user interface 10 is a smartphone or a tablet personal computer and connectable or connected to the internet. Thus, the external user interface 10 may be also used for additional applications, e.g. photos, messaging and/or games. Modifications of the control program and device-specific data of the domestic appliances 12 may be downloaded from the internet. Additionally, the external user interface 10 may include links to websites providing information about the corresponding domestic appliances 12.

Moreover, video clips related to the domestic appliances may be stored in the memory of the external user interface 10. For example, one or more user manuals and/or instructions for cleaning and/or operation of the domestic appliances 12 are formed as video clips and stored in the memory of the external user interface 10. The video clips may show how to exchange a wearing part and/or how to clean the domestic appliance 12. Further, the video clips may show cooking recipes or washing instructions for laundry.

In particular, the domestic appliance comprises an internal user interface including at least an on-off switch and/or a repeat key. Preferably, said internal user interface includes security relevant functions. For example, the on-off switch is provided for safety reasons. The repeat key allows that the domestic appliance may be started again with the same adjustments of the last operation. Usually, many users apply mostly the same adjustments.

Moreover, a child-proof lock may be activated or activatable by disconnecting the external user interface 10 from the domestic appliances 12. The child-proof lock is or can be configured to be activated after the external user interface 10 has been removed from the domestic appliance 12 by a predefined distance or when the signal strength of the external user interface decreases below a predefined level. From the signal strength, a distance can be calculated, by which the external user interface 10 has been removed from the domestic appliance 12.

Furthermore, the child-proof lock can be preferably be activated by operating a key or a combination of keys of the internal user interface, for example by entering a code or security code.

Activating the child-proof lock (or: child-lock, child-protection) may result in locking one domestic appliance 12, all domestic appliances or selected domestic appliances like a hob, an oven, a washing machine and/or a tumble dryer. In addition or alternatively, a domestic appliance, domestic appliances or selected domestic appliances might be even switched off after activating the child-proof lock.

However, said child-proof lock may be overcome by operating a key or a combination of keys of the internal and/or external user interface, especially for a predetermined minimum time. The disconnection of the external user interface 10 from the domestic appliances 12 may activate automatically the child-proof lock.

A service center contact function may be easily added to the external user interface 10. A spare part list may be downloaded from the internet and/or stored in the memory of the external user interface 10. Further, information about additional accessories for the domestic appliances 12 may be downloaded from the internet.

The external user interface 10 is configured to display, preferably in a first operating state, at least one user manual. Furthermore, the external user interface 10 can be configured to control, preferably in a second operating state, at least one operating function or parameter, for example an operating temperature, of at least one domestic appliance 12 using the control program. Furthermore, the external user interface 10 can be configured to contact, preferably in a third operating state, a service center. The contact can be made by transmitting an electronic message to the service center and/or by initiating a call to the service center.

In the embodiment, the output device 14 is configured to contact a server computer using an internet connection, download and/or receive a program and/or function for operating a domestic appliance 12 from the server computer, especially as program code, and transfer the program and/or function for operating the domestic appliance 12 to the domestic appliance 12 or to the memory of the external user interface. Therefore, the program and/or function can be installed on the domestic appliance 12 and/or on the external user interface by the external user interface.

The installation of the program and/or function on the domestic appliance can be triggered, for example, by an internal message of the external user interface or by a message of the external user interface which is transmitted to the domestic appliance 12. This makes it possible to add, modify or update one or several programs and/or functions of the domestic appliance by the external user interface and an external server computer.

In the embodiment, the functionality and/or operation elements of the internal user interface of the or each domestic appliance 12 are or can be limited to an on-off switch and/or a repeat key. Further functionality and/or operation elements of the user interface of the domestic appliance are or can be only arranged at the external user interface 10.

The domestic appliances and/or the external user interface 10 can be configured to save the settings of the domestic appliance as inputted by the user. In addition, one or each domestic appliance and/or the external user interface 10 can comprise a repeat key. After operating or pressing the repeat key, the saved settings of the domestic appliance can be applied again on the domestic appliance.

In the embodiment, the external user interface 10 can be configured to control the domestic appliances in such a way that a predetermined overall power consumption of the domestic appliances will not be succeeded. As an alternative or in addition, the domestic appliances can also be controlled in such a way that the domestic appliances are operated partially or entirely sequentially. For example, a washing machine might be operated after the operation of an oven has finished or vice versa.

In addition, the external user interface 10 can be configured in such a way that it operates domestic appliances during a preselected time span, for example during the night. In this case, the domestic appliances can be operated at times where the electricity is cheaper. Furthermore, for example, the external user interface 10 can control an oven to preheat during the operation of a cooking hob.

In addition, a timer on the external user interface 10 can begin to count down from a preset time span after the door of a domestic appliance, for example an oven, has been opened and/or closed. After the preset time span has been elapsed, another function can be triggered by the external user interface 10.

For example, the group of the domestic appliances comprises at least one cooking hob, cooking oven, microwave oven, dishwasher, refrigerator, freezer, washing machine, laundry dryer and/or washer-dryer. In particular, the group of domestic appliances are produced and/or distributed by the same producer and/or distributor, respectively.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: external user interface
- 12: domestic appliance, cooking hob
- 14: input device
- 16: output device
- 18: internal docking station
- 20: external docking station
- 22: cable
- 24: wireless connection
- 26: connector
- 28: first cable connection
- 30: second cable connection

## Claims

1. An external user interface (10) for controlling at least one domestic appliance (12), wherein
- the external user interface (10) includes at least one input device (14),
- the external user interface (10) includes at least one output device (16),
- the external user interface (10) includes at least one control unit,
- the external user interface (10) includes at least one memory for storing data and/or programs, and
- the external user interface (10) is formed as a mobile device,
**characterised in that**
the external user interface (10) is connectable to a predetermined group of domestic appliances (12), wherein the external user interface (10) is provided for controlling said group of domestic appliances (12), and wherein data and/or programs related to the domestic appliances (12) are stored in the memory of the external user interface (10).

2. The external user interface according to claim 1, **characterised in that**
the predetermined group of domestic appliances (12) comprises at least two domestic appliances (12), wherein preferably the at least two domestic appliances (12) are selected from domestic cookers, in particular cooking hobs, cooking ovens and/or microwave ovens, domestic laundry appliances, in particular washing machines, laundry dryers and/or washer-dryers, and domestic cooling appliances, in particular refrigerators, freezers and/or wine-coolers.

3. The external user interface according to claim 1 or 2, **characterised in that**
at least one user manual, at least one control program and/or device-specific data of the domestic appliances (12), in particular user manuals, control programs and/or device-specific data of different types of domestic appliances (12), are stored in the memory of the external user interface (10),
wherein the external user interface (10) is configured to display, preferably in a first operating state, at least one user manual and/or
wherein the external user interface (10) is configured to control, preferably in a second operating state, at least one operating function or parameter of at least one domestic appliance (12) using the control program and/or
wherein the external user interface (10) is configured to contact, preferably in a third operating state, a service center,
wherein preferably software updates of said user manual, control program and/or device-specific data are downloadable from the internet and installable in the external user interface (10).

4. The external user interface according to any one of the preceding claims,
**characterised in that** the output device (14) is configured to
- contact a server computer using an internet connection,
- receive a program and/or function for operating the at least one domestic appliance (12) from the server computer, especially as program code, and
- transfer the program and/or function for operating the at least one domestic appliance (12) to the domestic appliance (12) and/or to the memory,
- so that the program and/or function can be installed on the domestic appliance (12) and/or on the external user interface.

5. The external user interface according to any one of the preceding claims,
**characterised in that**
at least one video clip related to at least one domestic appliance (12) is stored in the memory of the external user interface (10), wherein preferably at least one user manual and/or instructions for cleaning and/or operation of the domestic appliances (12) is formed as a video clip and stored in the memory of the external user interface (10).

6. The external user interface according to any one of the preceding claims,
**characterised in that**
each domestic appliance of the group of domestic appliances (12) is connectable to the external user interface (10) and/or
is produced and/or distributed by the same producer and/or distributor, respectively.

7. The external user interface according to any one of the preceding claims,
**characterised in that**
a service center contact function for the domestic appliances (12) is formed as application software and stored in the memory of the external user interface (10).

8. The external user interface according to any one of the preceding claims,
**characterised in that**
the external user interface (10) is connectable to the domestic appliances (12) via a wireless connection, for example via a Wi-Fi, Bluetooth, ZigBee and/or WLAN connection and/or
the external user interface (10) is connectable to the domestic appliances (12) via a plug-in connection, for example via a USB cable and/or a docking station (18; 20).

9. The external user interface according to any one of the preceding claims,
**characterised in that**
the external user interface (10) includes at least one touch screen panel (14), so that the input device and the output device are formed by said touch screen panel (14), wherein preferably said external user interface (10) is a smartphone or a tablet personal computer and connectable or connected to the internet.

10. An arrangement of at least one domestic appliance (12) and an external user interface according to any one of the preceding claims,
wherein the at least one domestic appliance is preferably at least one domestic cooker, in particular cooking hob, cooking oven and/or microwave oven, dishwasher, domestic laundry appliance, in particular washing machine, laundry dryer and/or washer-dryer, and/or domestic cooling appliance, in particular refrigerator, freezer and/or wine-cooler.

11. An equipment system including the predetermined group of domestic appliances (12) and the external user interface (10) according to any one of the claims 1 to 9,
**characterised in that**
the external user interface (10) is connectable or connected to each of the domestic appliances (12) and provided for controlling the group of domestic appliances (12).

12. The equipment system according to claim 11,
**characterised in that**
at least one of the domestic appliances (12) includes an internal docking station (18) for receiving the external user interface (10), so that said domestic appliance (12) is connectable or connected to the external user interface (10) via a wiring connection and controllable by said external user interface (10) and/or
the equipment system includes an external docking station (20) for receiving the external user interface (10), so that the external user interface (10) is connectable or connected to the external docking station (20) via the wiring connection, wherein in turn said external docking station (20) is connectable or connected to the domestic appliances (12) via one or more wireless connections and/or plug-in connections.

13. The equipment system according to any one of the claims 11 or 12,
**characterised in that**
at least one of the domestic appliances (12) comprises an internal user interface, wherein said internal user interface includes at least an on-off switch and/or a repeat key, wherein preferably the functionality and/or operation elements of the internal user interface of the or each domestic appliance are limited to an on-off switch and/or a repeat key, wherein further functionality and/or operation elements of the user interface of the domestic appliance are only arranged at the external user interface
and/or wherein preferably said internal user interface includes security relevant functions.

14. The equipment system according to any one of the claims 11 to 13,
**characterised in that**
a child-proof lock is activated or activatable by disconnecting the external user interface (10) from the domestic appliances (12),
wherein preferably the child-proof lock is configured to be activated after the external user interface (10) has been removed from the domestic appliances (12) by a predefined distance or when the signal strength of the external user interface decreases below a predefined level and/or wherein preferably said child-proof lock is overcome by operating a key or a key combination of the internal and/or external user interface.

15. The equipment system according to any one of the claims 11 to 14,
wherein the external user interface (10) is configured to control the domestic appliances in such a way that a predetermined overall power consumption will not be succeeded and/or in such a way that the domestic appliances are operated partially or entirely sequentially.
